# FASCICULE DE BREVET EUROPEEN

(11) **EP 3 309 070 B1**
(45) Date de publication et mention de la délivrance du brevet: **27.02.2019**
(21) Numéro de dépôt: 17194708.8
(22) Date de dépôt: 04.10.2017
(51) Int. Cl.: B64D 1/02

(54) **DISPOSITIF D'ACCROCHAGE D'UNE CHARGE TELLE QU'UN EMPORT SOUS UN AERONEF**
VORRICHTUNG ZUM EINHÄNGEN EINER LAST WIE EINER LUFTTRANSPORTLAST UNTER EINEM LUFTFAHRZEUG
DEVICE FOR HANGING A LOAD SUCH AS A CARRIAGE UNDER AN AIRCRAFT

(30) Priorité: 13.10.2016 FR 1659915
(43) Date de publication de la demande: 18.04.2018
(73) Titulaire: Alkan, 94460 Valenton (FR)
(72) Inventeur: GUARALDO, Denis, 78140 VELIZY-VILLACOUBLAY (FR)
(74) Mandataire: Zimmermann, Alain

(56) Documents cités:
- EP-A1- 0 613 818
- FR-A1- 2 654 701
- FR-A1- 2 968 275

## Description

La présente invention concerne un dispositif d'accrochage d'une charge, telle qu'un emport, sous un aéronef, notamment sous une aile d'avion de chasse ou sous une cellule d'hélicoptère de combat.

Actuellement, pour accrocher des charges sous un aéronef, en particulier des réservoirs de carburant ou des armes telles que des bombes ou des missiles, il est courant d'utiliser des dispositifs d'accrochage venant s'insérer d'une part dans des puits de fixation disposés sous l'aéronef (aile d'avion ou cellule d'hélicoptère) et d'autre part dans des logements prévus à cet effet dans ladite charge ou dans un porte-charge intermédiaire.

Or, les charges sont parfois très différentes pour un même aéronef, que ce soit notamment leur poids, leur forme, leurs dimensions ou leur disposition. Pour des raisons de sécurité, les dispositifs d'accrochage doivent pouvoir supporter la charge sans que celle-ci se détache sous les contraintes infligées lors des différentes phases (accrochage, décollage, atterrissage, appontage, etc.) et libérer celle-ci facilement et de manière fiable lorsque cela est nécessaire (largage, dépose pour maintenance).

Pour cela, il est connu d'utiliser des dispositifs appelés tulipes comportant un système de rotule supérieure (liée à l'aéronef), de rotule inférieure (liée à la charge) et de galets rétractables de blocage permettant une certaine plage angulaire de débattement afin de les adapter au plus grand nombre possible de charges. Un tel dispositif est notamment écrit dans FR2968275.

Or, la mise en précontrainte hydraulique utilisée dans de ce type de dispositif pour maintenir les rotules liées l'une à l'autre n'est pas optimisée de sorte qu'il est difficile de conserver longtemps cette liaison. En effet, la difficulté est de maintenir cette précontrainte pendant une longue durée sans se servir de la pression hydraulique exercée, qui par des phénomènes de fuite, ne peut pas être maintenue sur une longue période de temps.

Un but de la présente invention est donc de résoudre les problèmes cités précédemment et de proposer une solution simple à mettre en oeuvre, fiable et compacte.

Ainsi, la présente invention a pour objet un dispositif d'accrochage d'une charge, telle qu'un emport, sous un aéronef, notamment sous une aile d'avion de chasse ou sous une cellule d'hélicoptère de combat, comprenant :
- une première rotule supérieure de liaison à une structure fixe de l'aéronef et comportant notamment des galets d'accrochage mobiles radialement disposés dans un corps tubulaire mobile axialement,
- une seconde rotule inférieure de liaison reliée à une structure mobile telle qu'un emport, la seconde rotule étant pouvant être relié à la première rotule par l'intermédiaire desdits galets d'accrochage lorsque ceux-ci sont en position écartée radialement dans ladite seconde rotule pour former avec celle-ci une liaison de type mâle-femelle,
- un piston adapté d'une part pour bloquer les galets écartés radialement dans la seconde rotule quand le dispositif d'accrochage est en position rétractée de verrouillage et d'autre part pour débloquer lesdits galets de manière à déverrouiller le dispositif d'accrochage,
- un système de génération de précontrainte destiné à maintenir, sur une longue durée, la liaison entre les deux rotules dans ladite position rétractée de verrouillage du dispositif d'accrochage,
caractérisé en ce que le système de génération de précontrainte comporte :
- une chambre hydraulique de précontrainte ménagée autour du corps tubulaire mobile et reliée à la structure fixe par l'intermédiaire de la première rotule supérieure, le corps mobile coulissant axialement dans ladite chambre hydraulique, et
- un actionneur électromécanique relié au corps tubulaire mobile, ledit actionneur électromécanique étant adapté d'une part pour bloquer axialement ledit corps tubulaire en position rétractée de verrouillage du dispositif d'accrochage de manière à maintenir la précontrainte générée par la pression hydraulique dans la chambre hydraulique une fois ladite pression retirée, et d'autre part pour pousser axialement ledit piston afin de débloquer radialement les galets de manière à déverrouiller le dispositif d'accrochage.

Selon des modes de réalisation préférés, le dispositif conforme à la présente invention comprend l'une au moins des caractéristiques suivantes :
- l'actionneur est de type linéaire et irréversible ;
- l'actionneur comporte un moteur électrique, un réducteur à engrenage et une roue à vis sans fin irréversible ;
- le moteur est pourvu d'un frein à manque de courant sur son axe moteur afin de garantir une irréversibilité totale ;
- l'actionneur comporte une butée de maintien de la précontrainte qui se déplace linéairement dans le corps tubulaire mobile axialement uniquement sous l'action du moteur électrique ;
- le dispositif est pourvu d'un doigt de verrouillage permettant de déplacer le piston lors de l'opération de verrouillage ;
- le piston est muni d'un ressort qui agit, au niveau d'une première extrémité, sur le doigt de verrouillage et, au niveau d'une seconde extrémité opposée, sur le piston de verrouillage ; et
- le dispositif comporte une butée de centrage et de transmission des efforts transverses venant entourer un support de rotule supérieure dans la position verrouillé.

L'invention va maintenant être décrite plus en détail en référence à des modes de réalisation particuliers donnés à titre d'illustration uniquement et représentés sur les figures annexées dans lesquelles :
- La figure 1 est une vue en coupe schématique d'un dispositif d'accrochage de charge en position déverrouillé avant accrochage,
- La figure 2 est similaire à la figure 1 mais en position accrochée du dispositif.

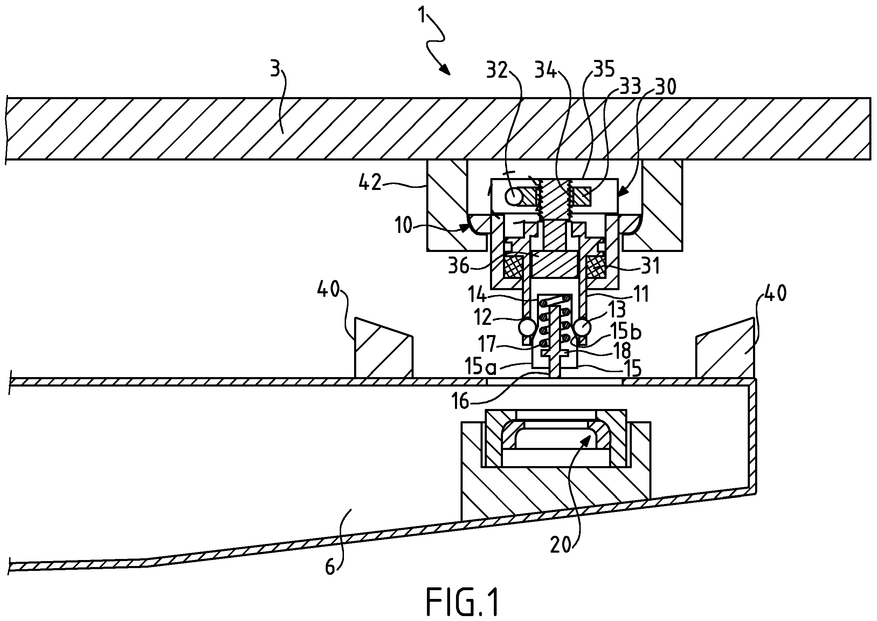

La figure 1 représente un dispositif 1 d'accrochage d'une charge accrochée sous un aéronef, tel qu'une aile d'avion de chasse ou une cellule d'hélicoptère de combat.

Ce dispositif 1 comporte principalement une première rotule supérieure 10 de liaison à une structure fixe 3 de l'aéronef, une seconde rotule inférieure 20 de liaison à une structure mobile 6 telle qu'un emport.

La première rotule 10 comporte notamment des galets d'accrochage 13 mobiles radialement à l'intérieur d'ouvertures 12 ménagées dans un corps tubulaire 11 mobile axialement.

La seconde rotule 20 est adaptée pour pouvoir être reliée à la première rotule 10 par l'intermédiaire des galets d'accrochage 13 lorsque ceux-ci sont en position écartée radialement dans ladite seconde rotule 20 pour former avec celle-ci une liaison de type mâle-femelle.

A cet effet, le corps tubulaire 11 renferme un piston 14 adapté d'une part pour bloquer les galets 13 écartés radialement dans la seconde rotule 20 quand le dispositif d'accrochage 1 est en position rétractée de verrouillage et d'autre part pour permettre le déblocage desdits galets 13 par coulissement sur une surface extérieure 15 droite 15a puis tronconique 15b de manière à déverrouiller le dispositif d'accrochage 1.

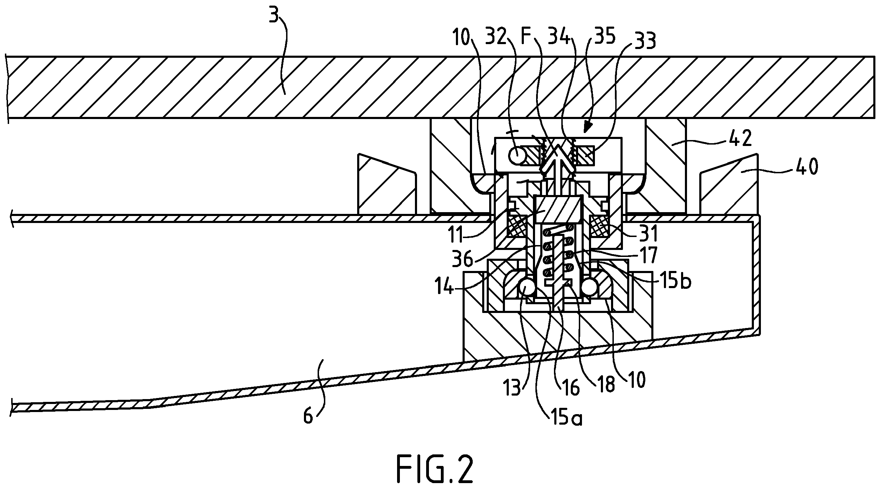

La première rotule 10 comporte également un système de génération de précontrainte 30 destiné à maintenir, sur une longue durée, la liaison entre les deux rotules dans ladite position rétractée de verrouillage du dispositif d'accrochage 1 (représenté sur la figure 2).

A cet effet, le système de génération de précontrainte 30 comporte une chambre hydraulique de précontrainte 31 ménagée autour du corps tubulaire 11 de sorte que ledit corps tubulaire peut coulisser axialement dans ladite chambre hydraulique, et un actionneur électromécanique 35 relié au corps tubulaire mobile 11, ledit actionneur électromécanique 35 étant adapté d'une part pour bloquer axialement ledit corps tubulaire 11 en position rétractée de verrouillage du dispositif d'accrochage 1 de manière à maintenir la précontrainte générée par la pression hydraulique dans la chambre hydraulique 31 une fois ladite pression retirée (figure 2), et d'autre part pour pousser axialement ledit piston 14 afin de débloquer radialement les galets 13 de manière à déverrouiller le dispositif d'accrochage 1 (figure 1).

Avantageusement, l'actionneur 35 est de type linéaire et irréversible et il comporte par exemple un moteur électrique 32, un réducteur à engrenage 33 et une roue à vis sans fin irréversible 34.

Le moteur électrique 32 est par ailleurs pourvu d'un frein à manque de courant sur son axe moteur afin de garantir une irréversibilité totale de l'actionneur 35.

L'actionneur comporte en outre une butée 36 de maintien de la précontrainte qui se déplace linéairement dans le corps tubulaire mobile axialement 11 uniquement sous l'action du moteur électrique 32.

Par ailleurs, le piston 14 est pourvu d'un doigt de verrouillage 16 permettant de déplacer ce dernier axialement lors de l'opération de verrouillage et d'un ressort interne 17 qui agit, au niveau d'une première extrémité, sur une excroissance radiale 18 du doigt de verrouillage 16 et, au niveau d'une seconde extrémité opposée, sur le piston de verrouillage 14.

Enfin, le dispositif 1 comporte une butée 40 de centrage et de transmission des efforts transverses venant entourer le support 42 de la rotule supérieure 10 dans la position verrouillé (figure 2).

Le fonctionnement du dispositif ainsi décrit est la suivant :
La structure mobile est manipulable par un moyen non représenté (un pantographe par exemple). Le mouvement généré par ce moyen de manipulation permet de déplacer la rotule inférieure 20 sensiblement dans l'axe de la rotule supérieure 10 liée à la structure fixe 3 (passage de la figure 1 à la figure 2).

Une fois les galets 13 du dispositif 1 engagés dans la seconde rotule inférieure 20, le piston de verrouillage 14 se déplace vers le haut grâce au doigt 16 qui est, dans cette configuration, en contact avec le fond de la rotule inférieure 20. De cette manière les galets 13 se déplacent radialement le long de la section tronconique 15b du piston 14 puis le long de la section droite 15a de sorte façon à se positionner dans la gorge de la rotule inférieure 20. Le ressort 17 entre le piston 14 de maintien de la précontrainte et le doigt de verrouillage 16 permet de maintenir le piston 14 en position, ce qui garantit le verrouillage des galets 13 (figure 2) .

Une fois cette opération de verrouillage des galets terminée, il est possible d'appliquer une précontrainte au dispositif en exerçant une pression dans la chambre hydraulique 31. Cette pression génère un effort axial sur le corps mobile 11. Cette effort axial est la précontrainte.

La difficulté est de maintenir cette précontrainte pendant une longue durée, sans se servir de la pression hydraulique qui, par des phénomènes de fuite ne peut pas être maintenue sur une longue période de temps.

L'intérêt de l'actionneur électrique irréversible 35 est de venir bloquer le corps mobile 11 en position, et donc de bloquer les galets 13 dans la seconde rotule inférieure 20. Le pilotage de l'actionneur 35 par le moteur électrique 32 permet de déplacer la butée 36 vers le haut (flèche F) et de la mettre en contact avec le corps mobile 11. Un pilotage du moteur en limitation de courant permet de garantir, en plus du contact, un effort minimal entre la butée 36 et le corps de l'accrocheur. Quand le moteur électrique 32 n'est plus alimenté et une fois la pression hydraulique annulée, l'irréversibilité de l'actionneur maintient les positions de la butée de précontrainte 36 et du corps mobile 11, ce qui entraine le maintien de la précontrainte.

Le principe de la double rotule est nécessaire pour s'assurer que les efforts de précontrainte sont bien dans l'axe du dispositif d'accrochage. Les efforts transverses sont repris par des formes extérieures du dispositif en forme de butée 40 qui viennent entourer le support 42 de la roture supérieure 10.

Il va de soi que la description détaillée de l'objet de l'Invention, donnée uniquement à titre d'illustration, ne constitue en aucune manière une limitation, les équivalents techniques étant également compris dans le champ de la présente invention.

## Revendications

1. Dispositif (1) d'accrochage d'une charge, telle qu'un emport, sous un aéronef, notamment sous une aile d'avion de chasse ou sous une cellule d'hélicoptère de combat, comprenant :
- une première rotule supérieure (10) de liaison à une structure fixe (3) de l'aéronef et comportant notamment des galets d'accrochage (13) mobiles radialement disposés dans un corps tubulaire mobile axialement (11),
- une seconde rotule inférieure (20) de liaison reliée à une structure mobile (6) telle qu'un emport, la seconde rotule (20) pouvant être reliée à la première rotule (10) par l'intermédiaire desdits galets d'accrochage (13) lorsque ceux-ci sont en position écartée radialement dans ladite seconde rotule (20) pour former avec celle-ci une liaison de type mâle-femelle,
- un piston (14) adapté d'une part pour bloquer les galets écartés radialement (13) dans la seconde rotule (20) quand le dispositif d'accrochage (1) est en position rétractée de verrouillage et d'autre part pour débloquer lesdits galets (13) de manière à déverrouiller le dispositif d'accrochage (1),
- un système de génération de précontrainte (30) destiné à maintenir, sur une longue durée, la liaison entre les deux rotules dans ladite position rétractée de verrouillage du dispositif d'accrochage (1),
**caractérisé en ce que** le système de génération de précontrainte (30) comporte :
- une chambre hydraulique de précontrainte (31) ménagée autour du corps tubulaire mobile (11) et reliée à la structure fixe (3) par l'intermédiaire de la première rotule supérieure (10), le corps mobile (11) coulissant axialement dans ladite chambre hydraulique (31), et
- un actionneur électromécanique (35) relié au corps tubulaire mobile (11), ledit actionneur électromécanique (35) étant adapté d'une part pour bloquer axialement ledit corps tubulaire (11) en position rétractée de verrouillage du dispositif d'accrochage de (1) manière à maintenir la précontrainte générée par la pression hydraulique dans la chambre hydraulique (31) une fois ladite pression retirée, et d'autre part pour pousser axialement ledit piston (14) afin de débloquer radialement les galets (13) de manière à déverrouiller le dispositif d'accrochage (1).

2. Dispositif (1) selon la revendication 1, **caractérisé en ce que** l'actionneur (35) est de type linéaire et irréversible.

3. Dispositif (1) selon la revendication 2, **caractérisé en ce que** l'actionneur (35) comporte un moteur électrique (32), un réducteur à engrenage (33) et une roue à vis sans fin irréversible (34) .

4. Dispositif (1) selon la revendication 3, **caractérisé en ce que** le moteur (32) est pourvu d'un frein à manque de courant sur son axe moteur afin de garantir une irréversibilité totale.

5. Dispositif (1) selon la revendication 3 ou 4, **caractérisé en ce que** l'actionneur (35) comporte une butée (36) de maintien de la précontrainte qui se déplace linéairement dans le corps tubulaire mobile axialement (11) uniquement sous l'action du moteur électrique (32) .

6. Dispositif (1) selon l'une quelconque des revendications précédentes, **caractérisé en ce qu'**il est pourvu d'un doigt de verrouillage (16) permettant de déplacer le piston (14) axialement lors de l'opération de verrouillage.

7. Dispositif (1) selon la revendication 6, **caractérisé en ce que** le piston (14) est muni d'un ressort (17) qui agit, au niveau d'une première extrémité, sur le doigt de verrouillage (16) et, au niveau d'une seconde extrémité opposée, sur le piston de verrouillage (14).

8. Dispositif (1) selon l'une quelconque des revendications précédentes, **caractérisé en ce qu'**il comporte une butée (40) de centrage et de transmission des efforts transverses venant entourer un support (42) de rotule supérieure (10) dans la position verrouillé.

## Patentansprüche

1. Vorrichtung (1) zum Einhängen einer Last, wie ein Träger, unter einem Flugzeug, insbesondere unter einem Jagdflugzeugflügel oder unter einer Kampfhubschrauberzelle, umfassend:
- ein erstes oberes Kugelgelenk (10) zur Verbindung mit einer festen Struktur (3) des Flugzeugs und bestehend aus insbesondere beweglichen Einrastrollen (13), die in einem axial beweglichen röhrenförmigen Körper (11) radial angeordnet sind,
- ein zweites unteres Kugelgelenk (20) zur Verbindung, das mit einer beweglichen Struktur (6) wie einem Träger verbunden ist, wobei das zweite Kugelgelenk (20) mit dem ersten Kugelgelenk (10) mittels der Einrastrollen (13) verbunden sein kann, wenn Letztere in dem zweiten Kugelgelenk (20) radial beabstandet sind, um mit diesem eine Art Steck-/Aufnahme-Verbindung zu bilden,
- einen Kolben (14), der einerseits ausgebildet ist, um die in dem zweiten Kugelgelenk (20) radial beabstandeten Rollen (13) zu blockieren, wenn sich die Einhängevorrichtung (1) in eingefahrener Verriegelungsposition befindet, und andererseits, um die Rollen (13) zu lösen, sodass die Einhängevorrichtung (1) entriegelt wird,
- ein System zur Erzeugung von Vorspannung (30), um über einen langen Zeitraum die Verbindung zwischen den zwei Kugelgelenken in der zurückgezogenen Verriegelungsposition der Einhängevorrichtung (1) aufrechtzuerhalten,
**dadurch gekennzeichnet, dass** das System zur Erzeugung von Vorspannung (30) Folgendes umfasst:
- eine hydraulische Vorspannkammer (31), die um den beweglichen röhrenförmigen Körper (11) angebracht ist und mit der festen Struktur (3) mittels des ersten oberen Kugelgelenks (10) verbunden ist, wobei der bewegliche Körper (11) axial in der hydraulischen Kammer (31) gleitet, und
- einen elektromechanischen Stellantrieb (35), der mit dem beweglichen röhrenförmigen Körper (11) verbunden ist, wobei der elektromechanische Stellantrieb (35) ausgebildet ist, um einerseits den röhrenförmigen Körper (11) in zurückgezogener Verriegelungsposition der Einhängevorrichtung (1) axial so zu blockieren, dass die von dem hydraulischen Druck in der hydraulischen Kammer (31) erzeugte Vorspannung aufrechterhalten wird, sobald der Druck weggenommen wird, und um andererseits den Kolben (14) axial zu drücken, um die Rollen (13) radial zu lösen, um die Einhängevorrichtung (1) zu entriegeln.

2. Vorrichtung (1) nach Anspruch 1, **dadurch gekennzeichnet, dass** der Stellantrieb (35) ein linearer und irreversibler Typ ist.

3. Vorrichtung (1) nach Anspruch 2, **dadurch gekennzeichnet, dass** der Stellantrieb (35) einen Elektromotor (32), ein Untersetzungsgetriebe (33) und ein nicht selbsthemmendes Schneckengetriebe (34) umfasst.

4. Vorrichtung (1) nach Anspruch 3, **dadurch gekennzeichnet, dass** der Motor (32) mit einer Stromausfallbremse an seiner Motorachse versehen ist, um eine völlige Irreversibilität zu gewährleisten.

5. Vorrichtung (1) nach Anspruch 3 oder 4, **dadurch gekennzeichnet, dass** der Stellantrieb (35) einen Anschlag (36) zum Aufrechterhalten der Vorspannung umfasst, der sich in dem axial beweglichen röhrenförmigen Körper (11) nur unter Einwirkung des Elektromotors (32) linear bewegt.

6. Vorrichtung (1) nach einem der vorhergehenden Ansprüche, **dadurch gekennzeichnet, dass** sie mit einen Verriegelungsfinger (16) versehen ist, so dass der Kolben (14) bei dem Verriegelungsvorgang axial bewegt werden kann.

7. Vorrichtung (1) nach Anspruch 6, **dadurch gekennzeichnet, dass** der Kolben (14) mit einer Feder (17) versehen ist, die auf Höhe eines ersten Endes auf den Verriegelungsfinger (16) und auf Höhe eines zweiten entgegengesetzten Endes auf den Verriegelungskolben (14) wirkt.

8. Vorrichtung (1) nach einem der vorhergehenden Ansprüche, **dadurch gekennzeichnet, dass** sie einen Anschlag (40) zur Zentrierung und Übertragung von Querkräften umfasst, der eine Halterung (42) der oberen Rolle (10) in der verriegelten Position umschließt.

## Claims

1. Device (1) for securing a load, such as a cargo item, under an aircraft, in particular under a fighter aircraft wing or under a combat helicopter airframe, comprising:
- a first upper ball joint (10) which is for connection to a fixed structure (3) of the aircraft and which comprises in particular securing rollers (13) which can be moved radially and which are arranged in an axially movable tubular member (11),
- a second lower connection ball joint (20) which is connected to a movable structure (6) such as a cargo item, the second ball joint (20) being able to be connected to the first ball joint (10) by means of the securing rollers (13) when they are in a position spaced apart radially in the second ball joint (20) in order to form therewith a male/female type connection,
- a piston (14) which is capable, on the one hand, of blocking the radially spaced-apart rollers (13) in the second ball joint (20) when the securing device (1) is in a retracted locking position and, on the other hand, of unblocking the rollers (13) so as to unlock the securing device (1),
- a preloading generation system (30) which is intended to maintain, over a long time, the connection between the two ball joints in the retracted locking position of the securing device (1),
**characterised in that** the preloading generation system (30) comprises:
- a hydraulic preloading chamber (31) which is arranged around the movable tubular member (11) and which is connected to the fixed structure (3) by means of the first upper ball joint (10), the movable member (11) sliding axially in the hydraulic chamber (31) and
- an electromechanical actuator (35) which is connected to the movable tubular member (11), the electromechanical actuator (35) being capable, on the one hand, of axially blocking the tubular member (11) in a retracted locking position of the securing device (1) so as to maintain the preloading generated by the hydraulic pressure in the hydraulic chamber (31) once the pressure is withdrawn and, on the other hand, of axially pushing the piston (14) in order to radially unblock the rollers (13) so as to unlock the securing device (1).

2. Device (1) according to claim 1, **characterised in that** the actuator (35) is of the linear and non-reversible type.

3. Device (1) according to claim 2, **characterised in that** the actuator (35) comprises an electric motor (32), a gear reducer (33) and a non-reversible worm gear (34).

4. Device (1) according to claim 3, **characterised in that** the motor (32) is provided with a fail-safe brake on the drive axle thereof in order to ensure complete non-reversibility.

5. Device (1) according to claim 3 or 4, **characterised in that** the actuator (35) comprises a preloading maintenance stop (36) which is moved linearly in the axially movable tubular member (11) only under the action of the electric motor (32).

6. Device (1) according to any one of the preceding claims, **characterised in that** it is provided with a locking finger (16) which allows the piston (14) to be moved axially during the locking operation.

7. Device (1) according to claim 6, **characterised in that** the piston (14) is provided with a spring (17) which acts, at a first end, on the locking finger (16) and, at an opposite second end, on the locking piston (14).

8. Device (1) according to any one of the preceding claims, **characterised in that** it comprises a stop (40) which is for centring and transmitting the transverse efforts and which surrounds a support (42) of the upper ball joint (10) in the locked position.
